(19) Europäisches Patentamt / European Patent Office / Office européen des brevets

(11) **EP 3 454 089 A1**

(12) **EUROPEAN PATENT APPLICATION**

(43) Date of publication:
**13.03.2019 Bulletin 2019/11**

(51) Int Cl.:
***G01S 19/21*** (2010.01)

(21) Application number: **17190139.0**

(22) Date of filing: **08.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Geosatis SA**
**2340 Le Noirmont (CH)**

(72) Inventors:
• **COLLI-VIGNARELLI, Edmund**
  **1220 Les Avanchets (CH)**

• **HUNKELER, Urs**
  **1026 Echandens (CH)**
• **FARIA PIRES, Nuno**
  **2340 Le Noirmont (CH)**
• **POTURALSKI, Marcin**
  **1015 Lausanne (CH)**
• **RÉTORNAZ, Philippe**
  **2350 Saignelégier (CH)**

(74) Representative: **reuteler & cie SA**
**Chemin de la Vuarpillière 29**
**1260 Nyon (CH)**

(54) **GEOLOCALIZATION SYSTEM WITH SPOOFING DETECTION**

(57)     A GNSS enabled device (2) configured to process pulse per second (PPS) signals, in particular from a GNSS satellite constellation to determine a global position of the GNSS enabled device. The device comprises a GNSS receiver module (4) configured to acquire the PPS signals, a computing unit (8), and a reference timer (6) comprising a local reference clock (16) and a timer circuit (18) to measure periods of said PPS signals. The computing unit and reference timer are configured to measure a variance in jitter of said PPS signals to determine whether the received PPS signal is genuine or spoofed.

FIG.2

EP 3 454 089 A1

**Description**

The present invention generally relates to a device comprising a geolocalization system with spoofing detection. The invention in particular relates to a portable autonomous device comprising a geolocalization system with spoofing detection.

A GNSS (Global Navigation Satellite System) is mostly based on a constellation of Earth orbiting satellites that together provide a global localization service. There are several such systems in operation such as the United States of America GPS (Global Positioning System), the Russian GLONASS and the European Galileo. The common architecture requires that each satellite, equipped with one or multiple built-in clocks, broadcasts a time-stamped signal. A terrestrial receiver determines its position using these signals and relativistic trilateration techniques. The distance between the receiver and each satellite can be determined by measuring the delay between the time stamp included into signals CKi and a reference clock CK0 located on the receiver. Practical implementations do not require CK0 because knowing only the time difference (CKi - CKj), where i, j ≠ 0, between the timestamps from all received signals is sufficient. In the latter case, the receiver calculates the position by solving a system of equations that link the differences between arriving times with the differences of relative positions. The position of each satellite in time (ephemeris) should be known, and is usually transmitted by the satellites themselves. Several additional corrections can be included in the system to encompass the imperfections of the Earth's shape, signal propagation conditions, and satellite clock adjustments, but these are not relevant to describe in this patent. In addition to the position and other GNSS related data, the receiver provides a reference clock signal with very high precision (very low jitter) called PPS (Pulse Per Second), which is synchronized with the clocks of the satellites. At least four satellite signals are required to determine the position and synchronise the receiver's clock without ambiguity.

The generalization and price decrease of electronic radio equipment, specifically the emergence of Software Defined Radio (SDR), has decreased the entry-point to generating fraudulent GNSS signals, commonly called spoofing. The motivations for this may be manifold, from disrupting transportation, to deceiving a GNSS-enabled personal device in order to be placed somewhere else for alibi or for recreational purposes. There are many software communities on the Internet that develop GNSS civil signal generators based and implemented on some Software Defined Radios. There are also several techniques for GNSS spoofing that are extensively described in the scientific literature.

An example of possible spoofing usage is by offenders wearing GNSS-enabled electronic monitoring (EM) devices. Using the technique, an offender could escape surveillance or to create an alibi in order to commit an offense. Another example of possible spoofing usage is in financial services: GNSS clock synchronization is fundamental for having a precise official time. For example, automated teller machines can synchronize with GNSS time in order to time stamp financial transactions. Any spoofing attempt in the neighbourhood of such a machine could corrupt the time recording of a transaction enabling criminal usages. Spoofing can be also used as a Denial of Service (DoS) attack against financial institutions. Another example of critical GNSS clock synchronization is on electrical power networks, with impacts that can be dramatic in case of undetected spoofing.

A GNSS spoofing technique known from US2015/0226858 is based on a comparison of the GNSS signal with a data signal from an external validated data source such as an atomic clock. Threat detection is based on averaging a comparison between the quantity of cycles received during a chosen interval of time and a predetermined expected clock cycle value. If the difference in timing and frequency of the GNSS signal compared to the validated source exceeds a certain threshold, a spoofing alert may be generated.

One of the drawbacks of the foregoing known technique which in essence measures a frequency offset in the GNSS signal, is that it relies on a validated data source of high accuracy, in particular using an atomic clock, that is expensive. Moreover, in view of the high frequency of the high precision clock the described technique is not very economical in power consumption, which is a disadvantage especially for autonomous battery powered devices equipped with GNSS receivers.

Moreover, typical personal mobile devices have size and power constraints and there is an advantage in being able to function with low power and computational resources.

An object of this invention is to provide a GNSS enabled device with spoofing detection that is reliable and economical to manufacture.

It would be advantageous to provide a GNSS enabled device with reliable spoofing detection that has low power consumption.

It would be advantageous to provide a GNSS enabled device with reliable spoofing detection that is compact and adapted for autonomous portable applications.

Objects of this invention have been achieved by providing the GNSS enabled device according to claim 1, and a method of detecting spoofing of GNSS pulse per second (PPS) signals according to claim 10.

Disclosed herein is a GNSS enabled device configured to process pulse per second (PPS) signals, in particular from a GNSS satellite constellation to determine a global position of the GNSS enabled device, the device comprising

- a GNSS receiver module (4) configured to acquire the PPS signals,
- a computing unit (8), and
- a reference timer (6) comprising a local reference clock (16) and a timer circuit (18) to measure periods of said PPS signals.

The computing unit and reference timer are configured to measure a variance in jitter of said PPS signals to determine whether the received PPS signal is genuine or spoofed.

In an embodiment, the GNSS receiver module may include a radio frequency (RF) module for capturing and demodulating said GNSS signals, a digital signal processor (DSP) for processing and extracting GNSS data from the raw GNSS RF signals, and an interface to communicate the GNSS data to the computing unit.

In an embodiment, the timer circuit may comprise a reference oscillator circuit connected to the local reference clock, and a bit counter and a latch connected to the reference oscillator circuit.

In an embodiment, the computing unit may comprise a statistical estimator program module to calculate an estimation of the jitter variance of the PPS signal.

In an embodiment, the statistical estimator program module may be a windowed statistical estimator program module.

In an embodiment, the local reference clock may comprise a quartz oscillator.

In an embodiment, the quartz oscillator may oscillate at a frequency with an order of magnitude of MHz, for instance 16MHz.

In an embodiment, the reference timer may further comprise a calibrating reference clock connected to the timer circuit to calibrate the local reference clock.

In an embodiment, the calibrating reference clock comprises a thermally compensated quartz oscillator (TCXO).

In an embodiment, the calibrating reference clock may oscillate at a frequency with an order of magnitude of kHz, for instance at or about 32,768 kHz.

In an embodiment, the frequency of the calibrating reference clock may be divided by the timer circuit to generate a 1 Hz clock frequency.

In an embodiment, the timer circuit may comprise first and second bit counters and first and second latches, the first bit counter and first latch connected to the local reference clock, and the second bit counter and second latch connected to the calibrating reference clock.

In an embodiment, the reference timer may be configured to operate intermittently to perform spoofing detection in cycles, the local reference timer being switched off between spoofing detection cycles, or operated at a frequency that is lower between spoofing cycles than during a spoofing cycle.

Also disclosed herein is an electronic monitoring bracelet for the surveillance of a person, incorporating a device according to any of the embodiments set forth above.

Also disclosed herein is a method of detecting spoofing of GNSS pulse per second (PPS) signals, comprising

- providing a GNSS enabled device according to any of the preceding claims,
- receiving with the GNSS receiver module PPS signals,
- generating reference signals with the reference timer,
- measuring with the timer circuit, periods of the PPS signals using the reference signals,
- calculating in the computing unit a variance in jitter of the PPS signals,
- determining in the computing unit whether said PPS signals are genuine or spoofed based on said variance in jitter of the PPS signals.

In an embodiment of the method, calculating said variance in jitter may include calculating in the computing unit a statistical spread of the jitter variance.

In an embodiment of the method, the computing unit may comprise a windowed statistical estimator program module for calculating the statistical spread of the jitter variance.

In an embodiment of the method, the step of determining whether said PPS signal is genuine or spoofed may comprise comparing the jitter variance, or a statistical spread of the jitter variance, with a predetermined threshold value stored in a memory of the device.

In an embodiment of the method, the steps of generating reference signals and measuring periods of the PPS signals may occur during a measurement cycle that is performed intermittently, the reference timer being switched off between measurement cycles.

In an embodiment of the method, the step of measuring periods of the PPS signals may comprise counting with a binary counter a number of oscillations of the reference clock or a frequency multiplication thereof and storing in a memory of the computing unit a binary value of the binary counter latched by a latch when a rising edge of a PPS signal is received from the GNSS receiver module.

In an embodiment, the method may further comprise calibrating the reference clock signal with a calibrating reference clock generating a 1 Hz signal.

In an embodiment of the method, the calibrating may comprise providing a first bit counter and first latch to measure the PPS periods, and a second bit counter and second latch to measure the 1 Hz signals from the calibrating reference clock 30, acquiring the values stored in the respective latches in the processing unit and performing the calibration by dividing the value stored in the first latch by the value stored in the second latch.

Further objects and advantageous features of the invention will be apparent from the claims and the following detailed description of embodiments of the invention in relation to the annexed drawings in which:

Figure 1 is a simplified schematic block representation of a GNSS enabled device according to the invention;

Figure 2 is a schematic block representation of a GNSS enabled device according to first embodiment of the invention;

Figure 3 is a schematic block representation of a GNSS enabled device according to a second embodiment of the invention;

Figure 4 is a schematic block flow chart of a method of spoofing detection implemented by a GNSS enabled device according to embodiments of the invention.

Various techniques for spoofing GNSS are known, however these techniques introduce artefacts that are normally absent from genuine GNSS signals. Being able to detect such artefacts allows spoofing to be detected thus improving the security of systems requiring GNSS receivers.

The present invention provides a method for the detection of GNSS spoofing artefacts with low energy consumption and without use of complex and expensive hardware such as an atomic clock.

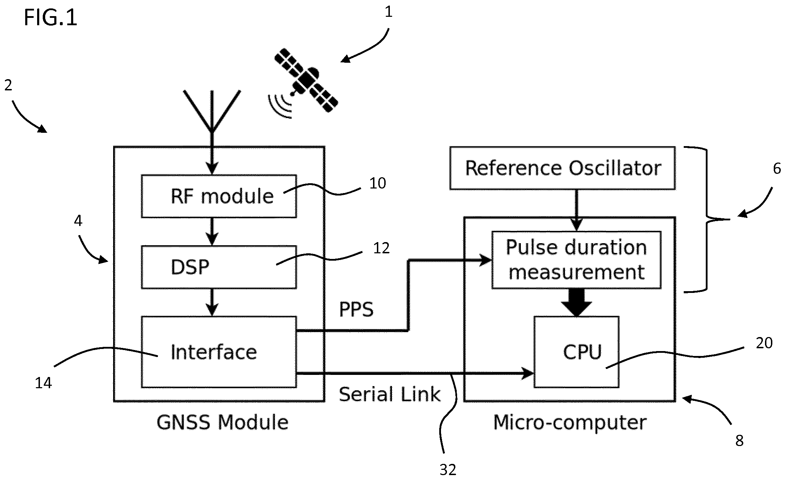

As illustrated in Figure 1, a GNSS system comprises a GNSS receiver module that acquires and decodes the data received from the GNSS satellites, and transmits them to a computing unit such as a CPU (Central Processing Unit) or micro-computer, for further processing. These data may typically be transmitted by using for example the NMEA 0183 (National Marine Electronics Association) protocol over a serial link with ASCII (American Standard Code Information Interchange) encoding. GNSS data can be transmitted by any other means, but reference to the latter example will be used herein for the sake of simplicity.

The GNSS receiver module includes a RF (Radio Frequency) front end for capturing and demodulating the GNSS signals, a DSP (Digital Signal Processor) for processing and extracting the GNSS data from the raw RF signals, and a computer interface to communicate and configure the GNSS module.

This implementation also depends on a GNSS-derived-clock signal. In commonly available GNSS receiver modules, this signal is usually supplied by a dedicated electrical pin that delivers a PPS (Pulse Per Second) signal which has a typical precision of about $\pm$ 40 ns. Because this signal is derived from the atomic clocks of the GNSS satellite constellation, the PPS signal is extremely precise and stable, much more than clocks on-board commonly available GNSS receiver modules.

In the present invention, one of the important aspects is that the spoofing detection method comprises measuring the variance in the jitter of the PPS signal received by a GNSS equipped device, measured by a reference timer installed within the GNSS equipped device.

If the variance in jitter exceeds a predetermined threshold, this may be because the GNSS signal is not received from a genuine GNSS constellation and a spoofing alert may be generated.

For measuring the jitter, the GNSS equipped device comprises a reference timer for measuring the period of a PPS impulse, whereby in embodiments, the reference timer comprises a timer circuit of a micro-computer and a reference electronic oscillator circuit connected to the timer circuit. This enables the micro-computer to determine the period of the impulse generated from the GNSS constellation and to calculate an estimation of the jitter by using a statistical estimator. In an advantageous embodiment, the statistical estimator may comprise a windowed variance estimator but any other similar estimator could be used within the scope of the invention, such as Principal component analysis (PCA), Support vector machine (SVN) or other statistical classificators.

The hardware of a GNSS equipped device according to embodiments of the invention may comprise various configurations, two of which are described in more detail hereinafter.

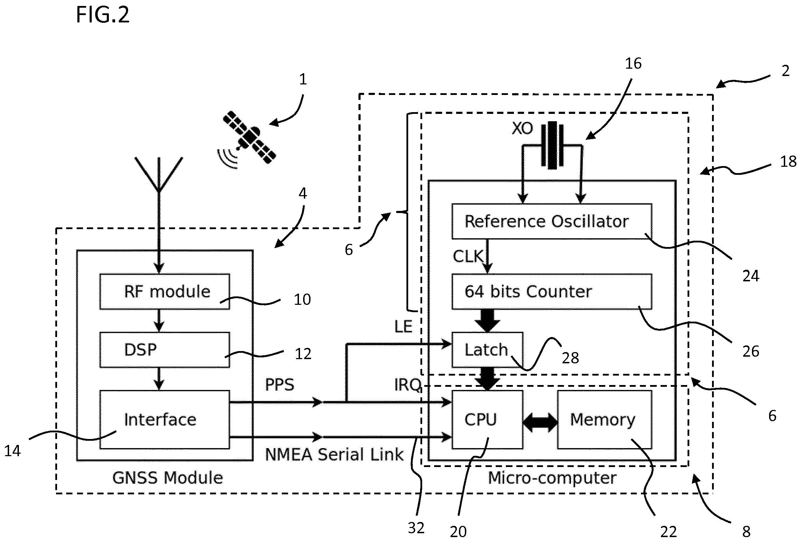

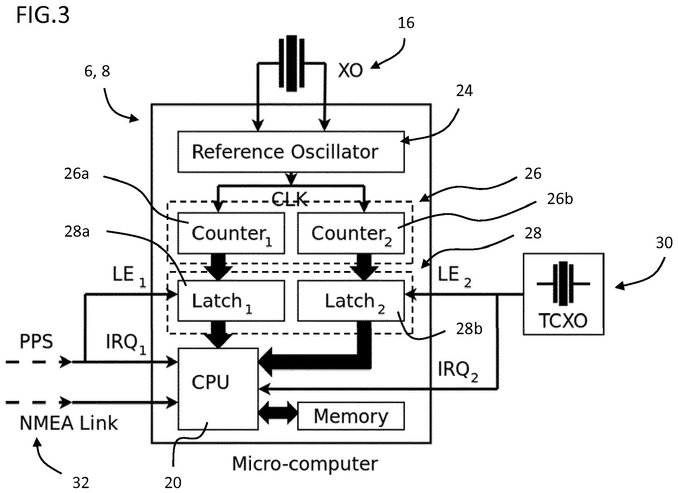

A GNSS equipped device 2 according to embodiments of the invention schematically illustrated in figures 2 and 3, includes a GNSS receiver module 4 for receiving PPS signals, and localization data from a GNSS satellite constellation 1, a reference timer 6 comprising a reference clock 16 and a timer circuit 18, and a computing unit 8 comprising a processing unit such as a central processing unit (CPU) and a memory 22. The timer circuit may form part of the computing unit 8, and may comprise a reference oscillator 24 connected to the reference clock 16, a bit counter 26 and a latch 28.

In a first embodiment of a GNSS equipped device 2, as schematically illustrated in figure 2, the reference timer 6 comprises a standard reference clock 16 having a precision similar to a precision expected, for example, from a standard quartz oscillator without any temperature compensation. For the sake of brevity, we call this type of oscillator "XO" in the present description without restricting the generality of its implementation. Standard reference clocks according to embodiments of the invention may include temperature compensated relaxation oscillator, silicon oscillator or LC (inductor-capacitor) oscillators.

In a second embodiment of a GNSS equipped device 2, as schematically illustrated in figure 3, the reference timer 6 comprises in addition to a standard reference clock 16 a higher precision calibrating reference clock 32 having a precision similar to a precision expected, for example, from a quartz oscillator with temperature compensation. For the sake of brevity we call this type of oscillator "TCXO" (Thermally Compensated Quartz Oscillator) in the present description without restricting the generality of its implementation. High precision reference clocks according to embodiments of the invention may include Voltage-controlled oscillators (VCXO), Oven-controlled crystal oscillators (OCXO), Temperature compensated voltage controlled crystal oscillator (TCVCXO).

Referring now to the first embodiment illustrated in figure 2, this embodiment may be implemented for instance when only an "XO" type of reference clock 16 is provided in the GNSS equipped device 2. The reference timer 6 of the GNSS equipped device to measure the period of the PPS impulse includes a reference clock CLK 16 comprising a quartz-based reference oscillator 24 connected to a timer circuit 18 that may advantageously include a PLL (Phase-Locked Loop) circuit portion for multiplying if needed the operating frequency. The reference timer 6 may advantageously comprise a synchronous (without ripple) binary counter 26 that increments on every pulse from the reference clock CLK 16.

The binary counter 26 of the reference timer 6 preferably comprises enough bits for avoiding any overflow during the whole sequence of jitter measurements, but the binary counter 26 may also comprise less bits than needed to avoid overflow provided that the effect of an overflow is corrected by a correction algorithm as described hereinbelow. In an embodiment, the binary value of the binary counter 26 is latched by the latch 28 and then stored (signal LE, Latch Enable) every time a rising edge PPS pulse occurs from the GNSS receiver module 4, and the computing unit 8 of the GNSS enabled device 2 is interrupted in order to acquire the latched value and to proceed to its processing (signal IRQ, Interruption Request). The binary counter 26 continues counting during the latching and the interruption processes. It may be noted that the binary counter 26 and the latch 28 may be conventional circuit elements such as found in conventional computing units for use as a timer device.

The reference timer 6 enables the computing unit 8 to count precisely how many reference pulses of the reference clock CLK 16 occur between two successive rising edges of the PPS pulses received from the GNSS receiver module 4.

Although the jitter variance measurement method provides acceptable results by using an "XO" type reference timer as described above, the quality of the detection may be improved by using a temperature compensated oscillator "TCXO" type where the higher operating frequency is the better for both precision and temperature stability. A higher precision of the reference timer reduces the jitter of the reference timer and thus the statistical spread of variance in the jitter between the reference and received signals, thus improving the ability to discriminate between genuine or spoofed signals.

However, in applications where low power consumption is important, for instance for portable battery powered GNSS enabled devices, using a "TCXO" type oscillator as sole reference clock, could lead to unacceptable power consumption in certain low-power or long autonomy applications. Power consumption of an oscillator generally increases with the operating frequency, whereby TCXO type oscillators and other high precision oscillators operate at higher frequencies than standard oscillators such as standard quartz oscillators without any temperature compensation.

For embodiments configured for applications where power consumption is not restricted to a level that impacts the choice of reference timer, it is also possible to use a TCXO type oscillator, or other type of high precision (high frequency) oscillator, as a sole reference clock, replacing the standard oscillator reference clock 16 implemented in the embodiment illustrated in figure 2.

In the second embodiment illustrated in figure 3, the calibrating reference clock 30 may be operated in a low-frequency mode, and thus has low-power consumption while maintaining a very high precision during the jitter measurement of the PPS signal.

The idea behind this implementation is to use a standard XO type oscillator as reference clock 16, but to calibrate it with a more precise second reference clock that is named herein the calibrating reference clock 30.

The operating frequency of the oscillator of the reference clock 16 may advantageously be a high frequency in the MHz order of magnitude, for instance around 16 MHz before PLL frequency multiplication. In an advantageous embodiment, the reference clock 16 may be periodically switched off in a duty-cycling mode of operation for saving energy between, or during, two campaigns of spoofing detection. The duty cycling mode of operation may advantageously be implemented in applications that can afford a sporadic control of the genuineness of the GNSS signals. In the latter embodiment, and the selected standard XO type oscillator has a fast start-up time in order to ensure effective duty cycling.

In an embodiment, the calibrating reference clock 30 may be a high precision TCXO operated a low-frequency in order to operate at low-power. The operating frequency of the TCXO can be in the kHz order of magnitude, for example 32 kHz (or 32,768 kHz) which is divided (in the frequency division sense) in order to generate a 1 Hz clock signal.

The aforementioned numerical values are simply examples for clarifying the orders of magnitude and the operating frequencies of the clocks may have different values within the scope of the invention.

In the second embodiment illustrated schematically in figure 3, the bit counter and latch provided in the first embodiment is duplicated such that there is a first bit counter 26a and first latch 28a dedicated to measure the PPS period, and a second bit counter 26b and second latch 28b dedicated to measure the 1 Hz clock from the calibrating reference clock 30. When either the PPS or the calibrating reference clock pulses generate their respective interruption, the processing unit 20 (CPU) acquires the value stored in their respective latch 28a, 28b and performs the calibration process. The calibration may be simply made by dividing (in the arithmetic sense) the value stored in the first latch 28a by the value stored in the second latch 28b in order to normalize the period of the PPS signal measured by the timer circuit portion connected to the reference clock 16 by the 1 Hz period of the calibrating reference clock 30. Proceeding in this manner enables a very high precision of the PPS jitter measurement even though the reference clock 16 operates at a relatively low precision. The cost of using an arithmetic division based on the values of the first and second latches 28a, 28b is negligible as it is made only once per second. Thus, the processing flow of the processing unit 20, which could also be dedicated to manage other real-time applications of the GNSS enabled device 2, is not degraded in a significant way.

The spoofing detection method according to embodiments of the invention relies on the ability to estimate accurately the jitter of the PPS signal received by the GNSS receiver module 4. This estimation is made by calculating the variance as the statistical estimator of the clock jitter of the PPS period, which is measured by using the local reference timer 6 of the GNSS enabled device 2. Depending on the origin of the GNSS signals (genuine or spoofed), this variance will change. However, because there is no highly precise and stable local time reference such as an atomic clock available on-board the GNSS enabled device 2, the setting of the threshold value that determines whether the obtained variance in the clock jitter of the PPS signal corresponds to a genuine or spoofed signal, requires adjustment according to the operational behaviour of the local reference clock 16.

In order to better understand how the jitter can be interpreted by a method according to embodiments of the invention, let us first consider a theoretical ideal scenario, and then explain how a real scenario differs, because it is this difference that characterizes the operational behaviour of the reference clock. For the sake of simplicity, and unless otherwise mentioned, it is assumed in this section that the PPS period is measured by using the first embodiment described above. The same principle applies to the second embodiment.

*A theoretical ideal scenario*

In the ideal scenario, let us first assume that the GNSS atomic clocks and the local reference clock 16 are perfectly matched and precise, without jitter. Thus, every PPS pulse's period is exactly one second, the average PPS pulse's period is also one second and the related variance (jitter) is zero.

If one however assumes that the received signal from the atomic clocks of the GNSS constellation are not perfect but the signal of the reference clock of the GNSS enabled device is, then the measured PPS pulse's jitter would not be zero, and the related variance would not be zero. In case of a spoofing attempt here, and assuming that the spoofing device uses conventional techniques for its local clock generation, i.e. any type of clock generation technique that is not based on atomic time measurement, then the PPS pulse's jitter will display a much greater degradation of the PPS signals, which is now based on the clock of a spoofing device, when compared to the clock precision obtained with the genuine GNSS constellation.

At this stage, a spoofing attempt is detected by measuring the PPS pulse's jitter by using a statistical method such as the variance, and by comparing this variance with a predetermined threshold. The way this threshold is predetermined could be empiric, analytic or adaptative according to other parameters such as the temperature for example.

*An exemplary real scenario*

In practice, the precision of a GNSS enabled device according to an embodiment of the invention is indeed much lower than that of the atomic clocks of the GNSS constellation. Assuming that the spoofing device does not use an atomic clock, the GNSS enabled device 2 and the clock of the spoofing device will be however both of the same order of magnitude. We can thus make the assumption that the GNSS constellation has an almost perfect clock compared with the clock of the GNSS enabled device 2 or a spoofing device. The jitter added by any spoofing device will be detected even though the GNSS enabled device 2 has its own jitter.

When the GNSS signals are genuine, the jitter of the PPS pulse is mainly due to irregularities of the reference clock of the GNSS enabled device 2 because the jitter from the satellites is negligible by comparison. This jitter is essentially generated by the GNSS enabled device 2 local reference clock 16 which is characterized and known. Thus the threshold below which the variance with the jitter of the satellite clocks should remain in order to confirm the genuineness of the GNSS signals is also known.

When the GNSS signals are fake signals from a spoofing device, the jitter of PPS pulse from the spoofing device compared to the GNSS enabled device 2 will create a variance above the said threshold because the measured jitter variance will combine both the imprecision of the reference clock 16 of the GNSS enabled device 2 and the jitter in the PPS signal generated by the clock of the spoofing device. It is very unlikely that the spoofing device would be able to generate a PPS signal with so small jitter compared to the clock of the satellite constellation so that is not possible to detect the forgery. One may assume that the only way to make the spoofing undetectable by this method would be to use an atomic reference clock in the spoofing device, as it is the case with the GNSS satellite constellation. This situation is ignored because an atomic clock is very expensive and additionally requires an extremely precise synchronization with the GNSS clock (see comments below regarding loose synchronization). Moreover, it constitutes a risk for the fraudulent spoofer if any mistake is made when switching the spoofing device on and off.

Loose synchronization occurs with mobile GNSS enabled devices when they stay for a long period in a non-GNSS zone. When they enter the GNSS zone after a while, any time discrepancy of the PPS signal caused by the presence of spoofed signals could not easily be detected because the initial time reference is lost and it will be rebuilt based on fake signals from the beginning. A method for detecting this is to measure the elapsed time between distant PPS pulses, when the GNSS signals are lost, and to check if they are close to a multiple of one second. If they differ noticeably from an integer number of seconds, this indicates that the new GNSS signals are not synchronized with the older ones and could be spoofed. For this purpose, an additional feature according to embodiments of the invention is to remain synchronized on the last PPS signal by comparing the time-stamp and PPS signal of the new GNSS trace with a very low-power RTC (Real-Time Clock) comprised in the GNSS enabled device 2. The RTC may be synchronized on the PPS signal of the last GNSS trace (before entering the non-GNSS zone) in order to detect any time gap due to the start of the spoofed signals inside the non-GNSS zone. This implementation is advantageous when the available power does not enable to use the bit counters and latches previously described due to the use of duty-cycling.

When the available power enables to use the bit counters and latches, another advantageous feature of an embodiment of the invention is to keep the value of the bit counter obtained by the PPS signal from the last GNSS trace (before entering the non-GNSS zone) and to compare it with the new PPS value obtained with the new trace, while maintaining the bit counter running inside the non-GNSS zone. Comparing how much it differs from a multiple of one second gives an estimation of the synchronization discrepancy due to the presence of spoofed signals. If the difference is very close to a mutiple of one second, the GNSS signals could be assumed to be genuine; if not, it could be due to a loosely synchronized spoofing device. The loose synchronization detection can be advantageously implemented in both embodiments previously described. The RTC can advantageously be included in the computing unit 8 of various embodiments, including the first and second embodiments described hereinabove.

*Description of an exemplary algorithm that may be implemented in embodiments of the invention*

For the following description, let :

$t$ be the absolute time (real number);
$n$ be the iteration index of the incoming PPS pulses (integer);
$N$ be the window's size for calculating the moving average and the moving variance (integer);
$f_0$ be the nominal operating frequency of the reference clock after PLL frequency multiplication (integer);
$PPS_0$ be the value (integer) of the counter that would be obtained when the PPS period and the reference oscillator are ideal (numerically, $PPS_0$ is equal to $f_0$);
$u$ be the number of bits (integer) of the counter (typically 32 or 64 in this context);
$T$ be the threshold (real number); and
$m$ be the safety margin both below and above the threshold (typically 0.1 in an advantageous implementation).

Every incoming PPS pulse received by the GNSS receiver module 4 activates the latch 28 thus latching the value of the bit counter 26, which is then stored by the CPU 20 for calculating the time difference between two consecutive pulses. This difference, noted $PPS_{diff(n)}$, where $n$ is the nth PPS pulse, is stored in a ring buffer of the computing unit 8 used for calculating the moving average and the moving variance of the jitter. The ring buffer stores N values and older values are discarded by the incoming new ones.

In case the reference clock 16 is a standard reference clock of type "XO" as previously described, it will be either faster or slower than the GNSS clock. It is very unlikely that it fluctuates closely both above and below the GNSS clock because the jitter (moving variance) is usually smaller than the frequency offset (moving average) due to manufacturing process or temperature. In order to compare the clocks, it is advantageous to symmetrize (or mirror) the values of the PPS period for example above $PPS_0$ when they fall below $PPS_0$. The choice of mirroring above is arbitrary; the method could also work if it is mirrored below. The mirroring enables and simplifies the use of the same threshold value for all cases. Another rationale for doing this is to ensure that variations close to $PPS_0$ could not accumulate when they fluctuate too often near $PPS_0$ such that they deliver an average of zero. In the worst case, this could lead to a division by zero when normalizing the variance. This symmetry correction is similar in principle to having an absolute value, excepted it is centered around $PPS_0$ instead of zero. When symmetrizing the PPS period for example above $PPS_0$, a small bias could be created in the jitter variance calculation when it fluctuates too closely around $PPS_0$. However, this bias is negligible in practice and the advantage of ensuring no division by zero largely compensates this minor drawback. Theoretically, the only case that could produce a division by zero at this stage would be to have $N$ consecutive times the condition

$$\llbracket PPS \rrbracket \_diff\ (n) = \llbracket PPS \rrbracket \_0,$$

which is statistically improbable with real clocks of standard type "XO".

The moving average and the moving variance are updated at every new incoming PPS pulse. The moving variance's value is advantageously normalized (divided) by the moving average's value minus $PPS_0$. This process of normalizing the variance by the average is similar to what is made in a conventional $\chi 2$ (khi-square) statistical test. It enables to make a fair comparison of several jitter variances samples by ignoring the frequency offset due to the mentioned evolving and uncontrolled conditions between these samples. Subtracting $PPS_0$ from the measured average enables to normalize the jitter variance with only the relative deviation from the ideal average value. In other words, doing so makes the meaning of the jitter variance to be less dependent on variations of the average frequency offset that normally occur due to, for example, temperature excursions, components ageing, and other similar external uncontrolled conditions. However, the normalization does not alter the jitter estimation in a way such as it overwhelms the true nature of the measured GNSS clock.

In the case of the second embodiment employing the calibrating reference clock (of type "TCXO"), symmetrization and the normalization are not required in most cases. As for the PPS pulse, the "TCXO" pulses' period is also one Hertz and is measured independently by using the local reference clock 16 with a high operating frequency. The measured period of the PPS is then arithmetically divided by the measured period of the TCXO reference pulse, thus delivering a precise PPS period that is used in the next steps of the method. The division is made only once per second and has thus a negligible calculating time cost for the CPU.

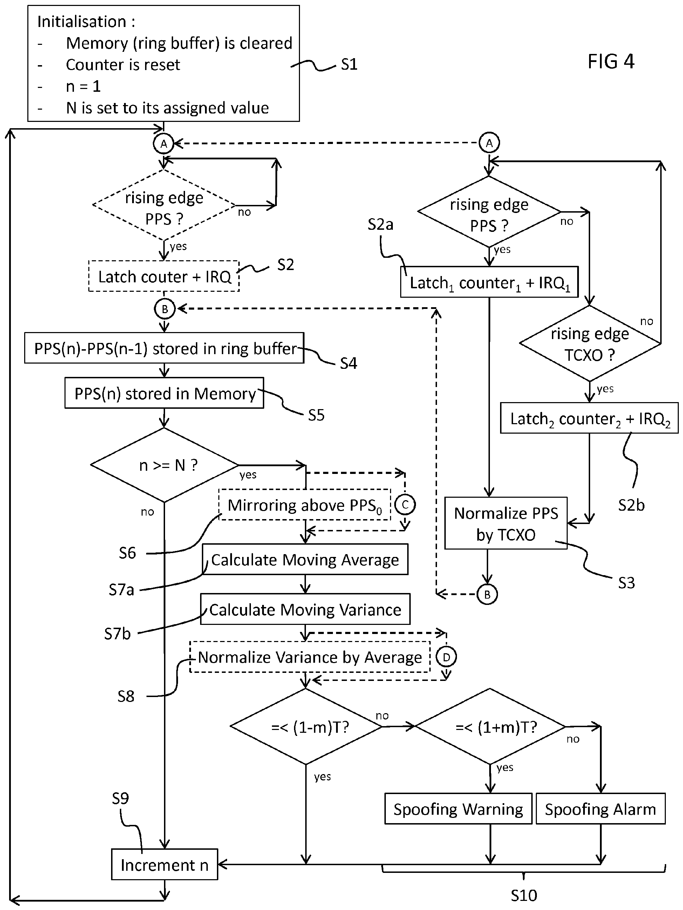

When using a "TCXO" type of calibrating reference clock 30, the effect of external and uncontrolled conditions on the stability of the local reference clock 16 are negligible and the discrepancy between natural and spoofed GNSS signals is much more obvious. Thus, there is no need to normalize the jitter variance, and no need to symmetrize the PPS period around $PPS_0$. Actually, in some cases, when the average is very close to $PPS_0$, using normalization may increase and exaggerate the sensitivity of the jitter variance and this could generate false alarms even without abnormal clock jitter. Because of this, using here the jitter variance normalization may not bring any benefit and could increase the occurrence of undesired and counter-productive side effects on the expected efficiency of the method when using a "TCXO" type calibrating reference clock. According to these considerations, it is advantageously recommended to proceed to steps 3 and 6 of the exemplary method of Figure 4 only when using a "XO" oscillator type of standard reference clock 16 without calibration, and to skip or ignore them when using a "TCXO" type calibrating reference clock 30.

In all cases, the value of the threshold $T$ and of the window's size for calculating the moving average and the moving variance $N$ may be advantageously adapted by experimentation as they depend heavily on the hardware specifications and the details of the implementation.

Finally, the moving variance's value is compared to a threshold $T$ in order to determine whether there is a spoofing attempt or not. A safety margin $m$ advantageously set at about 10% above the minimum threshold $T$ gives accurate results in practice.

Referring to Figure 4, an embodiment of method for determining whether a PPS signal is genuine or not is illustrated, and comprises the following steps:

*Acquisition :* Wait for the next $n$th PPS pulse; acquire the time stamp $PPS(t)$ from the latch register when the PPS signal is raised at time $t$ and store its value in a register of the memory;

$$PPS(n) \leftarrow PPS(t)$$

*Differentiation :* Calculate the difference between two consecutive time stamps in order to have the elapsed time between two consecutive PPS pulses and store the result in a register of the memory:

$$〖PPS〗\_diff (n)=PPS(n)-PPS(n-1)$$

In case the bit counter makes an overflow between the samples, correct the difference as follows:

$$〖PPS〗\_diff (n)=PPS(n)+(2^u-PPS(n-1)),$$

where $u$ is the number of bits of the bit counter and the expression$(2^u-PPS(n-1))$ is indeed the one's complement of PPS(n-1).

*Symmetry correction, or mirroring* (advantageously used with "XO" type) : The PPS period is symmetrized in order to ensure that only absolute deviations from $PPS_0$ are considered; this is made as follows:

If

$$〖PPS〗\_diff (n)< 〖PPS〗\_0$$

then correct the symmetry by using :

$$〖PPS〗\_diff (n)←2· 〖PPS〗\_0- 〖PPS〗\_diff (n).$$

If

$$〖PPS〗\_diff (n)≥ 〖PPS〗\_0$$

then do nothing.

*Moving average* : Calculate the moving average, with a given window's length of $N$, over the $N$ last PPS time differences (the ($N$+1)th samples are discarded from the memory):

$$Average(n)=1/N□∑\_(u=n-N)^n 〖PPS〗\_diff (u)$$

*Moving variance* : Calculate the jitter variance over the same set of PPS time differences:

$$Variance(n)=1/(N-1)□∑\_(u=n-N)^n 〖( 〖PPS〗\_diff (u)-Average(n))〗 ^2$$

*Normalization* (advantageously used with "XO" type, see text) : Divide the variance (at point $n$) by the average (at point n) obtained in step 4, minus $PPS_0$, in order to normalize the variance:

$$〖Variance〗\_norm (n)=(Variance(n))/(Average(n)- 〖PPS〗\_0 )$$

*Comparison* : Compare the Variance norm (case of "XO" or similar only) or Variance (case of "TCXO" or similar) at point $n$ with the threshold $T$ and safety margin $m$:

- If the result is smaller than (1-$m$) of the threshold, the GNSS signals are statistically considered as genuine.
- If the result is between (1-m) and (1+m) of the threshold, there is a suspicion of spoofing; the surveillance should be maintained or increased, waiting for a possible confirmation of the spoofing attempt.
- If the result is above (1+$m$) of the threshold, there is a high probability that the GNSS signals are spoofed. If required, the margin can alternatively be used to simply add an hysteresis to the threshold.

*Iteration* : Increment $n$, and repeat the sequence by jumping to step 1.

The above steps are graphically presented in Figure 4, which shows the processing flow and the conditional branches. The main flow presents the method when using a standard reference clock 16 alone. When using a "TCXO" type as a calibrating reference clock 30, the optional right flow is connected between points A and B in the main flow and replaces the flow in between in order to implement the calibration of the reference clock 16 by the calibrating reference clock 30. The point C short-cuts the flow in order to skip the mirroring step S3; and the point D short-cuts the flow in order to skip the variance normalization step S6.

The invention may advantageously be implemented in mobile GNSS enabled devices for electronic surveillance of persons, in particular electronic monitoring bracelets worn by offenders, for instance as described in EP2795588.

Advantages of embodiments of the invention include the following aspects.

- The GNSS enabled device according to embodiments of the invention may use conventional statistical methods for evaluating the dispersion of the clock jitter. The detection is probabilistic and depends on the environmental conditions; however, it is very unlikely that a spoofed signal is not detected after some time. More important, there is no mean to determine or to influence after how much time the method would detect the GNSS spoofing attempt; thus this uncertainty is an important factor to dissuade someone of deceiving a localization system.

- The GNSS enabled device according to embodiments of the invention uses advantageously the jitter variance, windowed other a given period of time $N$ (expressed in samples), of the received PPS signal jitter measured at the GNSS enabled device 2 for determining whether the received PPS signals are genuine or not. When the received PPS signals are genuine, namely they come from the GNSS satellite constellation, the measured jitter variance remains below a given threshold because only the clock jitter of the GNSS enabled device 2 is involved in the dispersion and is known. When the GNSS signal is spoofed, the jitter of the received PPS signals will go above the said threshold because the clock jitter of the spoofing hardware contributes and adds dispersion to the measured clock jitter at the GNSS enabled device 2, unless the spoofer is synchronized on the GNSS satellite clock or an independent atomic clock, which is very unlikely in practice.

- The GNSS enabled device according to embodiments of the invention uses advantageously the moving average over N samples of the clock jitter measured at the GNSS enabled device in order to normalize the above-mentioned variance of the said clock jitter. This normalization is recommended in order to use a constant threshold, which preferably remain as much as possible independent from the environmental conditions such as temperature, satellite constellation visibility, dilution of precision (DOP), and others. These environmental conditions are very likely to modify the moving average and thus the meaning of the variance. Determining the length of the moving average window and the threshold's value is an advantageous element of the usability of the invention and they heavily depend on the hardware used for implementing the receiver, and the robustness to false alarms required by the final user. The threshold could be fixed, or adaptive, in order to compensate, for example, temperature induced changes.

- The GNSS enabled device according to embodiments of the invention presents an advantageous approach for measuring the PPS period by using a very low-frequency low-power consumption TCXO (or similar) reference clock for calibration, and a high-frequency conventional XO (or similar) type of reference clock. The TCXO (or similar) is used to calibrate, by normalization, the measured period of the PPS pulse. This approach enables to have both a very high precision and a very low power consumption. It also enables the possibility to use in an on-and-off fashion the TCXO reference in order to reduce even more the power consumption without any noticeable decrease of the precision (duty-cycling use). It is not any more required to normalize the jitter variance by the average with this implementation.

- The present invention also describes a method for detecting loose synchronization for implementation in mobile devices and could be placed in non-GNSS zones. The method compares the time elapsed between the last PPS signal obtained before entering the no-GNSS zone with the new PPS signal obtained after leaving the no-GNSS zone. Genuine GNSS signals will keep the synchronization while spoofed signals will display a time-gap. One embodiment uses the internal bit counters to keep a trace of the last PPS signal; another one is to use a low-power RTC when duty-cycling is required for saving energy.

- A method according to embodiments of the invention may use conventional algorithms in a non-conventional way, thus the required calculating power is very small and it can be implemented by using a simple microcontroller with simple mathematical operations and programming structure. There is no need of a FPU (Floating Point Unit), for example.

- The quality of the detection depends on the precision of the GNSS enabled device's reference clock, but it is not required to be as precise as the GNSS atomic clock in order to work accurately since the jitter variance of the device's local reference clock relative to the GNSS atomic clock may be well characterized such that the difference with a spoofing device clock may be easily determined.

- The GNSS enabled device according to embodiments of the invention may be used alone and provides a very good security level against spoofing. This security can be improved by combination with other anti-spoofing detection techniques, provided that the other techniques are based on other clock-jitter-independent characteristics of the GNSS signal (considering independent characteristics improves the robustness of the spoofing detection).

- The GNSS enabled device according to embodiments of the invention may advantageously be used in particular for mobile devices in view of its low power consumption.

*List of references*

GNSS enabled device 2

GNSS receiver module 4

RF module 10
DSP 12
Interface 14

Reference timer 6

Reference clock 16
Timer circuit 18

Reference oscillator 24
Bit Counter 26

First bit counter 26a
Second bit counter 26b

Latch 28

First latch 28a
Second latch28b

Calibrating reference clock 32

Computing unit 8

Processing unit (e.g. CPU) 20
Memory 22

Link 30

Serial link
PPS link

GNSS satellite constellation 1

**Claims**

1. A GNSS enabled device (2) configured to process pulse per second (PPS) signals, in particular from a GNSS satellite constellation to determine a global position of the GNSS enabled device, the device comprising

   - a GNSS receiver module (4) configured to acquire the PPS signals,
   - a computing unit (8), and
   - a reference timer (6) comprising a local reference clock (16) and a timer circuit (18) to measure periods of said PPS signals,

wherein the computing unit and reference timer are configured to measure a variance in jitter of said PPS signals to determine whether the received PPS signal is genuine or spoofed.

2. The device according to claim 1 wherein the GNSS receiver module includes a radio frequency (RF) module (10) for capturing and demodulating said GNSS signals, a digital signal processor (DSP) (12) for processing and extracting GNSS data from the raw GNSS RF signals, and an interface (14) to communicate the GNSS data to the computing unit.

3. The device according to any preceding claim, wherein the timer circuit comprises a reference oscillator circuit (24) connected to the local reference clock (16), and a bit counter (26, 26a, 26b) and a latch (28, 28a, 28b) connected to the reference oscillator circuit.

4. The device according to any preceding claim, wherein the computing unit comprises a statistical estimator program module, for instance a windowed statistical estimator program module, to calculate an estimation of the jitter variance of the PPS signal.

5. The device according to any preceding claim, wherein the local reference clock comprises a quartz oscillator, for instance a quartz oscillator that oscillates at a frequency with an order of magnitude of MHz, for instance 16MHz.

6. The device according to any preceding claim, wherein the reference timer further further comprises a calibrating reference clock (30) connected to the timer circuit to calibrate the local reference clock.

7. The device according to any preceding claim, wherein the calibrating reference clock comprises a thermally compensated quartz oscillator (TCXO), the calibrating reference clock oscillating for instance at a frequency with an order of magnitude of kHz, for instance 32,768 kHz.

8. The device according to any of the two directly preceding claims, wherein the timer circuit comprises first and second bit counters and first and second latches, the first bit counter and first latch connected to the local reference clock, and the second bit counter and second latch connected to the calibrating reference clock.

9. An electronic monitoring bracelet for the surveillance of a person, incorporating a device according to any preceding claim.

10. A method of detecting spoofing of GNSS pulse per second (PPS) signals, comprising

- providing a GNSS enabled device according to any of the preceding claims,
- receiving with the GNSS receiver module PPS signals,
- generating reference signals with the reference timer,
- measuring with the timer circuit, periods of the PPS signals using the reference signals,
- calculating in the computing unit a variance in jitter of the PPS signals,
- determining in the computing unit whether said PPS signals are genuine or spoofed based on said variance in jitter of the PPS signals.

11. The method of the preceding claim wherein calculating said variance in jitter includes calculating in the computing unit a statistical spread of the jitter variance, for instance by means of a windowed statistical estimator program module installed in the computing unit for calculating the statistical spread of the jitter variance.

12. The method of any preceding claim wherein the step of determining whether said PPS signal is genuine or spoofed comprises comparing the jitter variance, or a statistical spread of the jitter variance, with a predetermined threshold value stored in a memory of the device.

13. The method of any preceding claim wherein the steps of generating reference signals and measuring periods of the PPS signals occur during a measurement cycle that is performed intermittently, the reference timer being switched off between measurement cycles.

14. The method of any preceding claim wherein the step of measuring periods of the PPS signals comprises counting with a binary counter (26) a number of oscillations of the reference clock or a frequency multiplication thereof and storing in a memory of the computing unit a binary value of the binary counter latched by a latch (28) when a rising edge of a PPS signal is received from the GNSS receiver module.

15. The method of any preceding claim further comprising calibrating the reference clock signal with a calibrating reference clock generating a 1 Hz signal.

16. The method of the preceding claim wherein the calibrating comprises providing a first bit counter (26a) and first latch (28a) to measure the PPS periods, and a second bit counter (26b) and second latch (28b) to measure the 1 Hz signals from the calibrating reference clock 30, acquiring the values stored in the respective latches (28a, 28b) in the processing unit (20) and performing the calibration by dividing the value stored in the first latch by the value stored in the second latch.

FIG.1

FIG.2

FIG.3

**FIG 4**

Initialisation :
- Memory (ring buffer) is cleared
- Counter is reset
- $n = 1$
- N is set to its assigned value

S1

rising edge PPS ? — no

yes

Latch couter + IRQ — S2

S2a

rising edge PPS ? — no

yes

Latch$_1$ counter$_1$ + IRQ$_1$

B

PPS(n)-PPS(n-1) stored in ring buffer — S4

rising edge TCXO ? — no

yes

PPS(n) stored in Memory — S5

Latch$_2$ counter$_2$ + IRQ$_2$

$n \geq N$ ? — yes

no

Mirroring above PPS$_0$  C

S6

S2b

Normalize PPS by TCXO

Calculate Moving Average

S7a

S3

Calculate Moving Variance

B

S7b

Normalize Variance by Average  D

S8

$=< (1-m)T$? — no

yes

$=< (1+m)T$? — no

yes

S9

Spoofing Warning

Spoofing Alarm

Increment n

S10

17

Europäisches
Patentamt

European
Patent Office

Office européen
des brevets

# EUROPEAN SEARCH REPORT

Application Number

EP 17 19 0139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Patrick Diamond: "ATIS Briefing - March 21, 2017", , 21 March 2017 (2017-03-21), pages 1-16, XP055455945, Retrieved from the Internet: URL:https://www.atis.org/01_news_events/briefings/timing-issues-vulnerabilities-gps-systems/PatDiamondslides.pdf [retrieved on 2018-03-02] * the whole document * | 1-16 | INV. G01S19/21 |
| A | WO 2014/047378 A1 (UNIV CORNELL [US]; PSIAKI MARK L [US]; POWELL STEVEN P [US]; O'HANLON) 27 March 2014 (2014-03-27) * page 30, line 17 - page 40, line 22 * * figures 1-6 * * abstract * | 1-16 | |
| A | US 2014/327574 A1 (ACHANTA SHANKAR V [US]) 6 November 2014 (2014-11-06) * page 7, paragraph 69 * * figure 10 * * abstract * | 1-16 | TECHNICAL FIELDS SEARCHED (IPC) G01S |
| A,D | US 2015/226858 A1 (LEIBNER DARROW PAINE [US] ET AL) 13 August 2015 (2015-08-13) * page 4, paragraph 49 - page 6, paragraph 58 * * figure 6 * * abstract * | 1-16 | |

The present search report has been drawn up for all claims

| Place of search | Date of completion of the search | Examiner |
|---|---|---|
| Munich | 2 March 2018 | von Walter, Sven-Uwe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 19 0139

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2018

| Patent document cited in search report | Publication date | Patent family member(s) | Publication date |
|---|---|---|---|
| WO 2014047378 A1 | 27-03-2014 | US 2015234053 A1<br>WO 2014047378 A1 | 20-08-2015<br>27-03-2014 |
| US 2014327574 A1 | 06-11-2014 | NONE | |
| US 2015226858 A1 | 13-08-2015 | EP 2908454 A2<br>US 2015226858 A1 | 19-08-2015<br>13-08-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150226858 A

- EP 2795588 A